Europäisches Patentamt

European Patent Office

Office européen des brevets

(11) Veröffentlichungsnummer: **0 355 557**
**A1**

(12) **EUROPÄISCHE PATENTANMELDUNG**

(21) Anmeldenummer: **89114579.9**

(22) Anmeldetag: **07.08.89**

(51) Int. Cl.⁴: **D01H 1/32 , D01H 1/22**

(30) Priorität: **05.08.88 CH 2975/88**

(43) Veröffentlichungstag der Anmeldung:
**28.02.90 Patentblatt 90/09**

(84) Benannte Vertragsstaaten:
**AT BE CH DE ES FR GB GR IT LI LU NL SE**

(71) Anmelder: **MASCHINENFABRIK RIETER AG**
**Postfach 290**
**CH-8406 Winterthur(CH)**

(72) Erfinder: **Meyer, Urs, Dr.**
**Hohfurristrasse 1**
**CH-8172 Niederglatt (ZH)(CH)**
Erfinder: **Hüppi, Stefan**
**Oberbrüglen**
**CH-6340 Baar(CH)**
Erfinder: **Hartmeier, Werner**
**Im Ifang 11**
**CH-8307 Effretikon(CH)**

(74) Vertreter: **Dipl.-Phys.Dr. Manitz**
**Dipl.-Ing.Dipl.-Wirtsch.-Ing. Finsterwald**
**Dipl.-Phys. Rotermund Dipl.-Chem.Dr. Heyn**
**B.Sc.(Phys.) Morgan**
**Robert-Koch-Strasse 1**
**D-8000 München 22(DE)**

(54) **Textilmaschine mit Streckwerk.**

(57) Es wird eine Textilmaschine mit einem Streckwerksantrieb beschrieben, welcher einen positionsgeregelten bürstenlosen Gleichstrommotor Mx mit elektronischer Kommutation 31 umfaßt.

Fig. 2

# EP 0 355 557 A1

## Textilmaschine mit Streckwerk

Die Erfindung betrifft eine Textilmaschine mit einer Reihe von Streckwerken und einer Anzahl von Textilspindeln, wie dies im Oberbegriff des Patentanspruchs 1 definiert ist.

Bei Textilmaschinen, welche ein Streckwerk enthalten, kann es sich beispielsweise um Ringspinnmaschinen, Flyer, Trichter-, Glockenspinnmaschinen oder dergleichen handeln. Das Streckwerk dient dabei dem Verziehen eines Faserbandes auf eine gewünschte Materialstärke, welche möglichst genau eingehalten werden soll.

Die Drall-Einleitung nach dem Streckwerk bzw. die Aufwickelgeschwindigkeit beim anschließenden Aufwickeln auf eine Spule muß sehr genau auf die Antriebsgeschwindigkeit des Streckwerkes abgestimmt sein, um Unregelmäßigkeiten im Garn, Fadenbrüche, oder Abweichungen in der Fadenstärke zu vermeiden. Besonders kritisch ist die Abstimmung der Antriebsgeschwindigkeit eines Streckwerks an die Spindeldrehzahl auf einer Ringspinnmaschine, da die Eigendynamik des mit hoher Geschwindigkeit umlaufenden Ringes sowie die Geometrie des auf die Spindel auflaufenden Fadens (Fadenballon) nicht durch Unregelmäßigkeiten des vom Streckwerk ablaufenden Fadens gestört werden dürfen. Diese Abstimmung muß während allen Betriebsphasen genau aufrechterhalten werden, während die Spinnstelle Faden produziert, also auch beim Hochlaufen und Abbremsen.

Zur Abstimmung der Streckwerkdrehzahl auf die Drehzahl des Drallgebers sind mechanische und elektrische Kupplungselemente zwischen beiden Antriebsteilen bekannt. Die mechani schen Kupplungsteile bestehen aus Getrieben mit im allgemeinen auswechselbaren Zahnradsätzen zur Anpassung an verschiedene Garnqualitäten oder andere Produktionsbedingungen. Eine elektrische Kupplung ist z.B. aus DE 29 11 378 bekannt, wonach umrichtergespeiste Synchronmotoren mit variabler Frequenz in der Drehzahl gesteuert werden. Die Erzeugung der Taktfrequenz für die Speisung erfolgt durch einen Referenz-Taktgeber sowie mehrere Frequenzteilerstufen. Abhängig von der Drehzahlvorgabe wird die entsprechende Sollfrequenz gemäß der bekannten Motorcharakteristik in eine für die Speisung des Motors geeignete Drehstrom-Spannung umgesetzt. Da die Frequenzteilung nur in ganzzahligen Werte-Stufen erfolgen kann, läßt sich ein gewisser Restfehler in der Winkellage zwischen den einzelnen Antrieben und damit auch ein gewisser Drehzahl-Fehler mit den bekannten Mitteln nicht beseitigen.

Beim erwähnten Drehstrommotor handelt es sich um einen Synchron- oder Asynchronmotor, mit einer einigermaßen bekannten Spannungs/Frequenz-Charakteristik. Wegen des geringen Kippmomentes eines solchen Motors muß seine Nennleistung praktisch dem beim Anfahren verlangten Drehmoment entsprechen. Bedingt durch die relativ große Anzahl von mechanischen Lagerstellen und Reibwiderständen innerhalb eines Streckwerkes kann das Anfahrdrehmoment jedoch relativ hoch werden, verglichen mit dem Drehmoment während des Normalbetriebes. An Ringspinnmaschinen werden beispielsweise Streckwerks-Antriebsmotoren auf etwa 5 Watt Nennleistung pro Spinnstelle ausgelegt; dies bedeutet eine Motorleistung von 5 kW bei einer Maschine mit 1000 Spinnstellen.

Nachteilig bei den bekannten gekoppelten Streckwerkantrieben ist die erwähnte relativ hohe Nennleistung für den Antriebsmotor, die aufwendige Frequenz/Spannungsregelung sowie das Fehlen einer Noteinrichtung, die ein kontrolliertes Abstel len bei plötzlichem Spannungsausfall sicherstellt. Ein solcher Spannungsabfall hat für bekannte Maschinen der erwähnten Art ein unkontrolliertes Auslaufen zur Folge, was spätestens beim Wiederanfahren der Maschine zu einer hohen Zahl von Fadenbrüchen führt. Verbesserungswürdig sind außerdem die normalen Anfahr- und Abschaltbedingungen an derartigen Textilmaschinen, welche besonders auf langen Streckwerken durch Torsionsschwingungen bedingte relativ hohe Fadenbruchzahlen zur Folge haben.

Es ist Aufgabe der vorliegenden Erfindung, eine Textilmaschine der eingangs genannten Art dahingehend zur verbessern, daß die genannten Nachteile eliminiert werden. Gemäß der Erfindung wird die Aufgabe durch die in Patentanspruch 1 definierten Merkmale gelöst.

Der Vorteil dieser Lösung besteht im wesentlichen in kontrollierten Auslaufbedingungen bei plötzlichem Stromausfall sowie in präzis und feinstufig regelbaren Anlauf- und Auslaufbedingungen. Schließlich läßt sich ein merklich kleiner dimensionierter Antriebsmotor für das Streckwerk verwenden, dessen Nennleistung beispielsweise nur 1/3 der Nennleistung von Motoren an bekannten Maschinen dieser Art beträgt. Ein weiterer Vorteil zeigt sich an besonders langen Textilmaschinen, bei denen z.B. der Zylinder eines Streckwerks sich über 30 bis 40 Meter erstreckt.

Obwohl es bereits Vorschläge zur Unterteilung dieser Zylinder gibt, läßt sich die Synchronisierung der Streckwerk-Drehzahlen mit denjenigen des Hauptantriebs mit der vorliegenden Erfindung besonders einfach, präzis und zuverlässig lösen, so daß sich auch für lange Zylinder erhebliche Verbesserungen ergeben.

2

Probleme besonderer Art ergeben sich bei Spinnmaschinen ins besondere auch aus dem Umstand, daß diese eine Vielzahl von Zylindern umfassen. So sind üblicherweise in einer Ringspinnmaschine drei und in einer Vorspinnmaschine vier Zylinder vorgesehen.

Die Zylinder definieren eine Vielzahl von Streckzonen, von denen eine im allgemeinen die Hauptstreckzone ist, in welcher der größte Teil der Verstreckung durchgeführt wird. Die Drehverhältnisse der Zylinder dieser Streckwerkanordnung sind von entscheidender Bedeutung für den Betrieb der Gesamtanordnung. Fehler in diesen Verhältnissen führen unmittelbar zu Fehlern im aus dem Faserband gesponnenen Garn, da es nicht möglich ist, Verzugsfehler zwischen der Streckwerkanordnung und der Spinnstelle (Spindel oder andere einen Drall vermittelnde Elemente) zu beseitigen. Dies trifft insbesondere auf die beiden die Hauptstreckzone definierenden Zylinder und/oder die Zylinder im Lieferbereich zu. Der Grund dafür ist, daß sich die hauptsächliche (und kritische) Drehzahldifferenz zwischen den Zylindern einstellt, welche die Hauptstreckzone definieren, d.h. die Zone mit der höchsten Verstreckung, und die höchsten Zylinderdrehzahlen im Lieferbereich gegeben sind.

Bei einer solchen Textilmaschine, insbesondere Spinnmaschine, mit einer Reihe von Spinnstellen, welche jeweils aus einem ihnen zugeführten Faserband einen gesponnenen Faden bilden, und einer Streckwerkanordnung zur Abgabe von verstreckten Faserbändern an die Spinnstellen, wobei die Streckwerkanordnung eine Vielzahl von insbesondere jeweils jeder Spinnstelle zugeordneten Zylindern umfaßt, ist erfindungsgemäß vorgesehen, daß zumindest einer der Zylinder durch einen mit einer Rückkopplungsschleife zwischen seinem Aus- und Eingang versehenen Motor antreibbar ist, wobei zumindest eine vorgebbare Ausgangscharakteristik des Motors entsprechend einem vorgebbaren Sollwert regelbar ist.

Diese Ausgangscharakteristik kann die Ausgangsdrehzahl (Umdrehungen pro Minute) der Motorwelle sein. Vorzugsweise ist diese Charakteristik jedoch durch die Drehstellung der Motorwelle gegeben.

Der Motor kann alle Zylinder der Streckwerkanordnung antreiben, wobei zwischen den Zylindern entsprechende mechanische Verbindungen vorgesehen sind, um die gewünschten Drehverhältnisse zwischen diesen sicherzustellen.

Vorzugsweise treibt der Motor jedoch lediglich einen einzigen Zylinder der Anordnung an.

Vorzugsweise werden zumindest zwei Zylinder durch einen jeweiligen, oben definierten Motor angetrieben. In einem solchen Falle ist zumindest einer der Hauptantriebsmotoren ein positionsgeregelter Motor, d.h. ein Motor mit zugeordnetem Regelsystem zur Aufrechterhaltung der Drehstellung der Motorausgangswelle innerhalb einer vorbestimmten Toleranz (Fehler) einer durch ein Regelsystem definierten Lage.

Sind zwei positionsgesteuerte Motoren vorgesehen, so werden diese vorzugsweise für einen Antrieb der Zylinder der Hauptstreckzone verwendet.

Ist lediglich ein positionsgeregelter Motor vorgesehen, so wird dieser vorzugsweise nach dem Master-Slave-Prinzip geregelt, wobei der Master-Motor ein rotationsgeregelter Motor ist, der den Lieferzylinder der betreffenden Streckzone antreibt.

Einzelheiten und weitere Vorteile der Erfindung werden in der nachfolgenden Beschreibung anhand von Ausführungsbeispielen mit Hilfe der Zeichnungen näher erläutert.

Es zeigen:

Fig. 1 das stark vereinfachte Blockschaltbild der relevanten Elemente einer bekannten Ringspinnmaschine,

Fig. 2 das Blockschaltbild der relevanten Elemente an einer Ringspinnmaschine gemäß der Erfindung,

Fig. 3 das bevorzugte Ausführungsbeispiel einer integrierten Motorregelung,

Fig. 4 ein weiteres Ausführungsbeispiel für eine zweckmäßige Motorregelung,

Fig. 5 ein drittes Beispiel für eine Motorregelung,

Fig. 6 das Beispiel einer Motorregelung für zwei in Serie geschaltete Antriebsmotoren am gleichen Streckwerk,

Fig. 7 das Beispiel einer Master-Slave-Regelung für zwei Motoren eines Streckwerkes,

Fig. 8 das Beispiel einer Regelung für zwei autonom geregelte Antriebsmotoren am gleichen Streckwerk, und

Fig. 9 ein Diagramm zur Darstellung der Antriebsregelung einer Streckwerkanordnung gemäß einer weiteren erfindungsgemäßen Ausführungsvariante.

In den folgenden Beispielen wird die bevorzugte Anwendung der Erfindung an einer Ringspinnmaschine beschrieben, da die Vorzüge der Erfindung an dieser Maschine wegen des empfindli chen Zusammenwirkens zwischen Streckwerk und Spindel bzw. Läufer besonders gut zutage treten. Es versteht sich jedoch, daß dieses Beispiel nicht einschränkend ist, sondern daß die Erfindung auch an anderen Textilmaschinen mit Streckwerken grundsätzlich die gleichen Vorteile bringt.

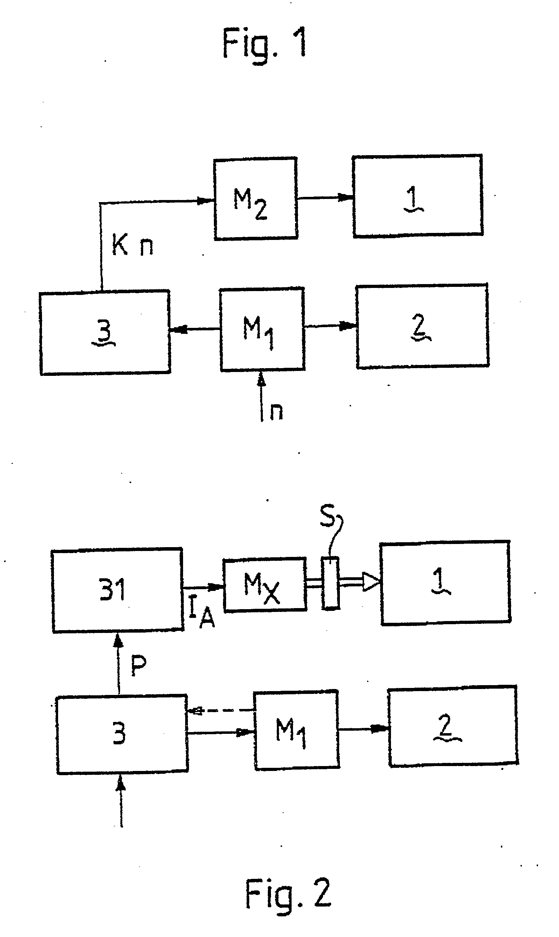

Figur 1 zeigt in schematischer Darstellung ein Streckwerk 1, von welchem ein gestreckter Faden durch eine Spindel 2 abgenommen und zu einem nicht gezeigten Garnkörper (sog. Kops) aufgewickelt wird. Die Spindel 2 ist von einem Motor M1 als Hauptantrieb mit der Drehzahl n angetrieben, während das Streckwerk 1 von einem Motor M2 mit der Drehzahl K*n abhängig vom Hauptantrieb angetrieben wird. M2 ist drehzahlgesteuert, wobei das Verhältnis K*n in einem Leitrechner 3 aufgrund bestimmter Vorgaben, wie Spinnparameter, vorgegeben ist. Anstelle der gezeigten elektrischen Drehzahlableitung für den Streckwerksantrieb M2 kann das Streckwerk 1 auch über ein mechanisches Zahnradgetriebe zum Antrieb des Streckwerks 1 vom Spindelmotor M1 selbst angetrieben sein.

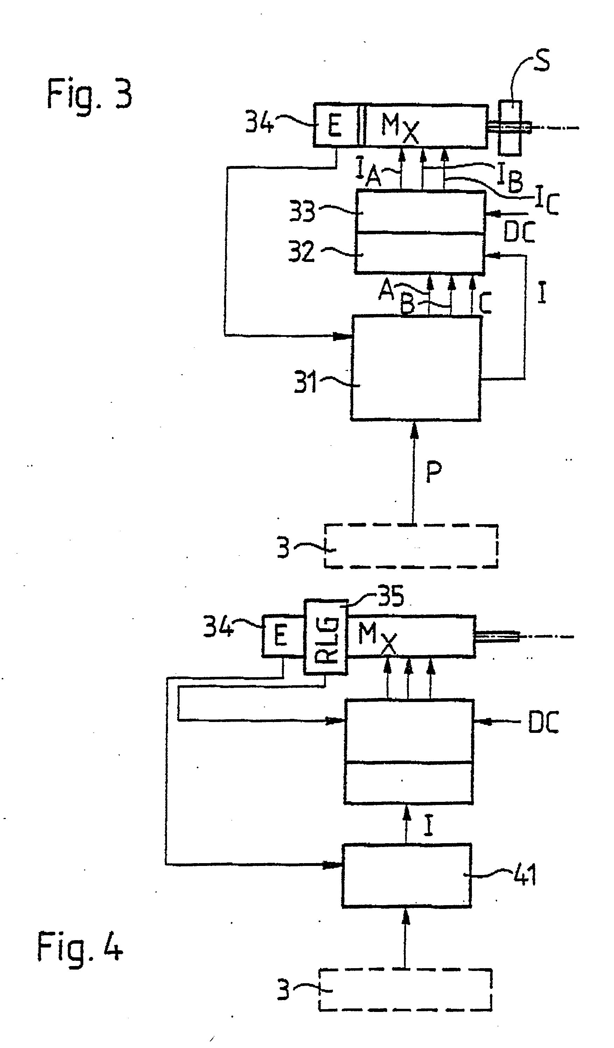

Gemäß der schematischen Darstellung nach Figur 2 weist die erfindungsgemäße Ausbildung als wesentlichen Unterschied gegenüber der bekannten Ausbildung nach Figur 1 einen geregelten bürstenlosen Gleichstrommotor Mx mit einer auf der Motorwelle integrierten oder angesetzten Schwungmasse S auf. Die Speisung des Motors Mx erfolgt über ein Regelgerät 31 mit integrierter elektronischer Kommutation. Es ist hier als Funktionseinheit angedeutet und im einzelnen z. B. gemäß Figur 3, 4 oder 5 ausgebildet. Das Regelgerät 31 erhält seinen Drehzahl-Sollwert Psoll vom übergeordneten Leitrechner 3.

Im Beispiel nach Fig. 3 liefert ein digitaler Lageregler 31 mit elektronischer Kommutation nach Vorgabe einer manuell eingegebenen oder von einem übergeordneten Rechner 3 gegebenen Soll-Lage Psoll und durch Vergleich mit Lage-Istwerten Pist die Sollstromwerte Isoll. Pist wird von dem positionsgeregelten Streckwerksmotor Mx abgeleitet, z. B. durch einen Positionsgeber 34, der auf der Welle des Motors Mx befestigt ist. Der Lageregler 31 erzeugt zunächst je nach Rotorstellung die Zuordnungs-Signale A, B, C für die elektronische Kommutierung. Weiter errechnet er den Strom-Sollwert Isoll. Dieser wird einem Stromregler 32 zugeführt, der daraus über eine Endstufe 33 die geregelten Phasenströme Ia, Ib, Ic für Mx herleitet.

Beim Motor Mx handelt es sich um einen bürstenlosen Gleichstrommotor oder Servomotor, der ein wesentlich günstigeres Anfahrverhalten zeigt als herkömmliche Synchron-, Reluktanz-oder Asynchronmotoren. Insbesondere ist ein bürstenloser Gleichstrommotor kurzzeitig auf das Mehrfache seines Nenndrehmomentes überlastbar, und zwar während einer Zeitperiode, die größer ist als die typischen Anfahrzeiten bei Textilmaschinen von z. B. 5 sec. Dies bedeutet, daß die Nennlast des Motors nicht in erster Linie auf das eingangs erwähnte hohe Anfahrdrehmoment hin gewählt werden muß, sondern daß die Nennleistung des Motors auf den Normalbetrieb zugeschnitten sein kann und die kurzzeitige Überlastung während der Anfahrphase zur Erbringung eines höheren Anlauf-Drehmomentes durchaus im Rahmen der üblichen Leistungsgrenzen liegt.

In der Praxis bedeutet dies z. B., daß als Streckwerkmotor an einer Ringspinnmaschine zur Bedienung von 1000 Spinnstellen anstelle eines 5 kW-Reluktanzmotors ein bürstenloser Servomotor mit elektronischer Kommutation von nur 1,5 kW Nennleistung gewählt wird. Dieser Motor läßt sich während einer typischen Anfahrzeit von etwa 5 Sekunden zu 350% überlasten, um das erforderliche Anfahrdrehmoment zu erbringen. Die maximale Drehzahl dieses Motors wird auf 6000 Umdrehungen pro Minute festgelegt.

In Verbindung mit der elektronischen Kommutation und dem digitalen Lageregler gemäß Figur 3 ergibt sich für den Streckwerkantrieb eine außerordentlich hohe Lagepräzision ohne Schleppfehler, wie sie z. B. bei Asynchronmotoren oder bei Reluktanzmotoren mit einer eingangs erwähnten Frequenzteilerspeisung auftreten.

Besonders günstig wirkt sich die direkte dynamische Regelung in Verbindung mit der zusätzlichen Rotorschwungmasse S aus. Für das Beispiel einer Ringspinnmaschine der zuvor erwähnten Größe beträgt die Auslaufzeit der Maschine etwa 10 Sekunden. Besteht die zusätzliche Schwungmasse auf dem Rotor des Streckwerkmotors Mx z. B. aus einer Eisenscheibe von 200 mm Durchmesser und ca. 3 mm Dicke pro 100 Spinnstellen, also für 1000 Spinnstellen 30 mm Dicke, so genügt die kombinierte Massenträgheit aus dieser Schwungmasse, dem Motorrotor sowie den anderen bewegten Massen des Streckwerks, um eine allein durch die mechanische Massenträgheit verursachte Auslaufzeit zu erzeugen, die der Auslaufzeit des Hauptantriebs, im Beispiel also des Spindelantriebs, entspricht. Damit ist auch bei plötzlichem Stromausfall die Voraussetzung gegeben, daß der Streckwerksantrieb während der Auslaufzeit mit dem Spindelantrieb synchron gehalten werden kann. Die Gefahr von Fadenbrüchen bei unvorhergesehenem Spannungsfall wird durch diese Maßnahme erheblich reduziert.

Als Regler 31 hat sich ein integrierter Positionsregler hat sich ein integrierter Positionsregler mit elektronischer Kommutation als vorteilhaft erwiesen, wie er z. B. als integrierter Schaltkreis Typ HCTL-1000 von Hewlett-Packard vertrieben wird. Mit diesem Reglertyp ist eine besonders einfache und trotzdem genaue Positionsregelung ohne die geringste Gefahr von Torsionsschwingungen sichergestellt.

Eine solche Regelung in Verbindung mit dem erwähnten Servomo tor stellt eine sehr direkte Regelung mit außerordentlich guten dynamischen Eigenschaften dar, die sich in Verbindung mit den Streckwerken zu einer harmonischen Antriebseinheit verbindet.

Figur 4 zeigt eine Abwandlung des Reglers gemäß Figur 3, bei welchem am Motor Mx ein zusätzlicher Rotorlagegeber 35 vorgesehen ist, dessen Ausgang auf eine Regler-Endstufe mit Kommutierung einwirkt.

4

Dieser Endstufe wird ähnlich wie im Beispiel nach Figur 3 ein bezüglich der Lage nachgeregeltes Sollsignal für den Motorstrom zugeführt.

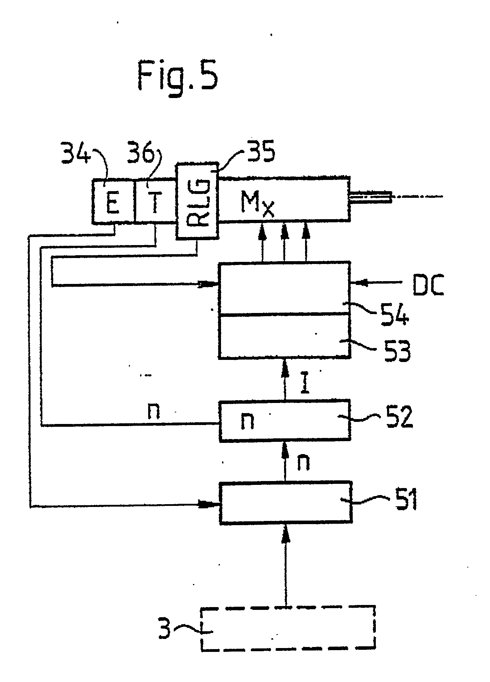

Eine weitere Modifikation des Reglers zeigt Figur 5. Dort ist zusätzlich ein Tachogenerator T am Motor vorgesehen, wobei aus der Lageabweichung in einem Lageregler 51 zunächst eine Solldrehzahl abgeleitet und einem Drehzahlregler 52 zugeführt wird, welcher diesen Wert mit dem Ist-Wert von Tachogenerator T vergleicht und daraus den Strom-Sollwert Isoll zur Ansteuerung der Endstufe ableitet.

Überschreiten die Stränge eines solchen Streckwerkes eine gewisse Länge, würden sich trotz präziser Positionsregelung des Antriebsmotors Mx mechanische Torsionsschwingungen der Streckwerkszylinder unangenehm bemerkbar machen. Zur Eliminierung derartiger Schwingungen wird das Streckwerk an beiden Enden durch je einen Motor angetrieben.

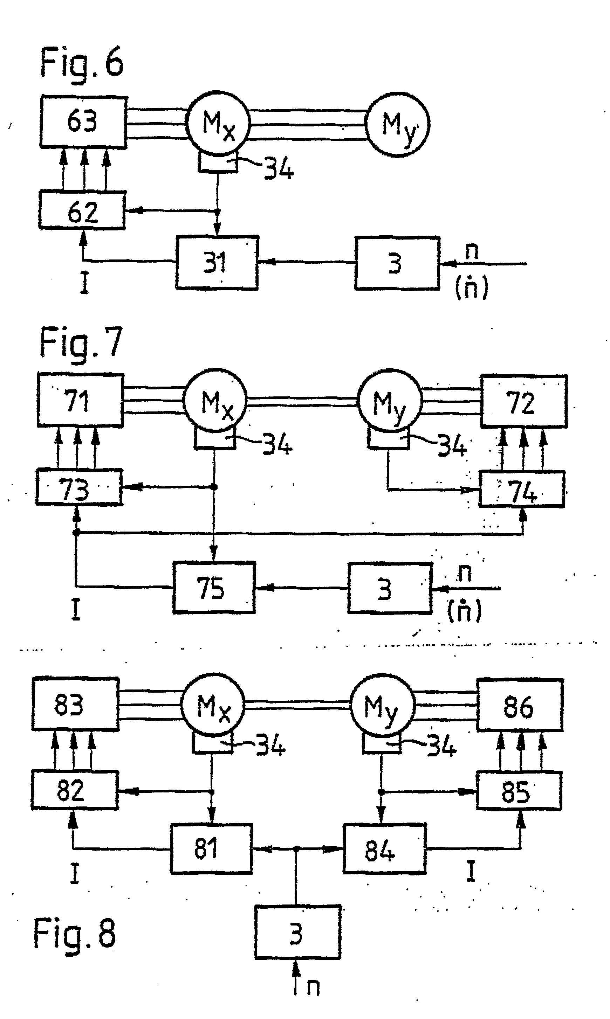

Die Figuren 6 bis 8 zeigen verschiedene Ausführungsbeispiele für die zweckmäßige Regelung von zwei auf denselben Zylinder wirkenden Antriebsmotoren unter strikter Einhaltung des Synchronismus, ohne Gefahr eines Gegeneinanderarbeitens der beiden Motoren.

Gemäß Figur 6 sind zwei Motoren Mx und My in Serie geschaltet, wobei nur am Motor Mx ein Positionsgeber 34 angeordnet ist. Dieser wirkt, wie z. B. in Verbindung mit Figur 3 beschrieben, auf den Lageregler 31 und auf den nachgeschalteten elektronischen Kommutator 62. Die auf diesen folgende Endstufe 63 speist die beiden in Serie geschalteten Motoren Mx und My. Besonders geeignet ist dieses Ausführungsbeispiel für sehr kleine Torsionswinkel, also z. b. für relativ kurze Zylinderlängen am Streckwerk.

Figur 7 zeigt ein weiterentwickeltes Ausführungsbeispiel. Die Motoren Mx und My werden durch separate Endstufen 71, 71 gespeist welche je einen vorgeschalteten elektronischen Kommutator 73 bzw. 74 aufweisen. Nach dem Prinzip der abhängigen Regelung (Master-Slave) wird ein einziger Lageregler 75 nur vom ersten Motor Mx bezüglich seiner Istlage nachgeregelt. Der Strom-Sollwert Isoll des Lagereglers 75 wirkt auf beide elektronischen Kommutatoren 73 und 74. Damit ist sichergestellt, daß beide Motoren Mx und My das gleiche Drehmoment erzeugen.

In einem weiteren Ausführungsbeispiel gemäß Figur 8 sind zwei vollständig geregelte Motoren Mx und My eingesetzt. Ausgehend von einem Lagerechner 3 ist ein erster Lageregler 81 zur autonomen Regelung des ersten Motors Mx über einen elektronischen Kommutator 82 und eine Endstufe 83 vorgesehen, während ein zweiter Lageregler 84 über einen elektrischen Kommutator 85 eine zweite Endstufe 86 bedient, an welche der zweite Motor My angeschlossen ist.

Durch die beschriebene Kombination eines positionsgeregelten bürstenlosen Gleichstrommotors als Streckwerksantrieb mit einer vom Hauptantrieb geführten Mikroprozessor-Regelung und einer mechanischen Schwungmasse ergibt sich eine überraschend starke Verbesserung in der Präzision der Streckwerks-Synchronisierung mit dem Hauptantrieb.

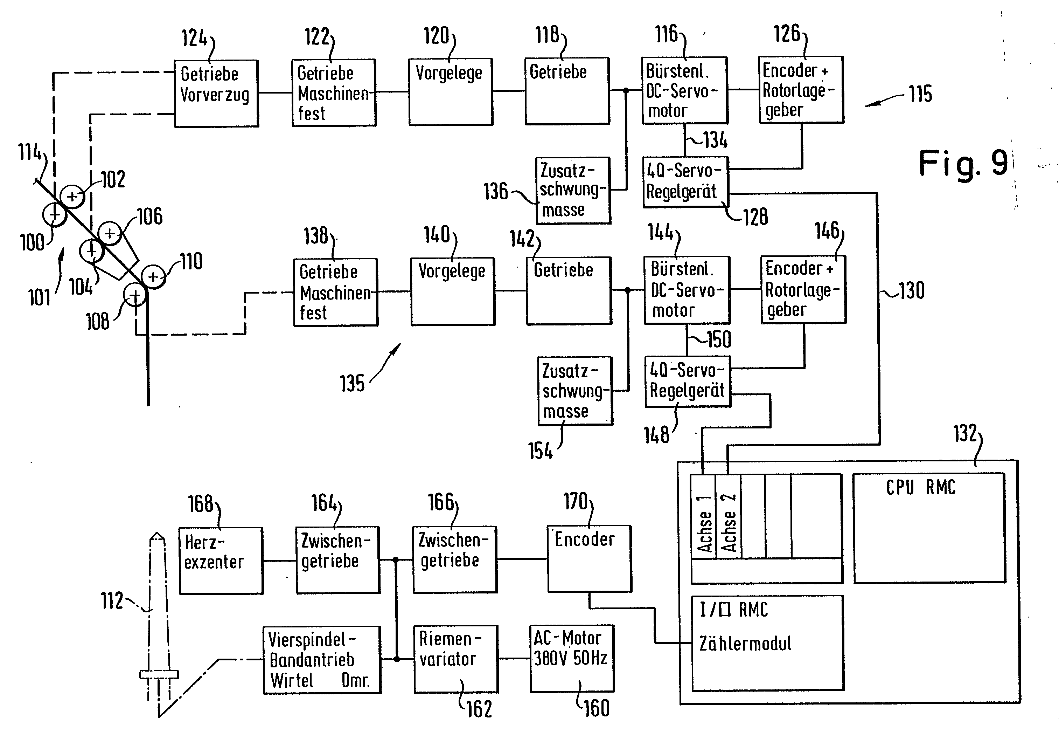

Figur 9 zeigt in Form eines Diagramms eine Streckwerkanordnung 101 mit einer Vorverzugszone zwischen einem Einzugszylinder 100 (mit Oberwalze 102) und einem Mittelzylinder 104 (mit Oberwalze 106), und einer Hauptverzugszone zwischen dem Mittelzylinder 104 und einem Lieferzylinder 108 (mit Oberwalze 110). Obwohl dies in der Zeichnung nicht dargestellt ist, erstreckt sich jeder Zylinder 100, 104 und 108 über die gesamte Länge der Maschine über eine Reihe von Spinnstellen, von denen eine (als Spindel) bei 112 schematisch dargestellt ist. Die Spinnstellen können andere Spinnelemente als Spindeln umfassen (z. B. Luftdüsen-Vorrichtungen). Die Oberwalzen 102, 106 und 110 sind entsprechenden Spinnstellen zugeordnet. Die Streckwerkanordnung 101 erhält ein Faserband 114 von einer entsprechenden Versorgungseinheit (nicht gezeigt) und liefert das Band in verdünnter bzw. verfeinerter Form der Spinnstelle 112.

Die Zylinder 100 und 104 sind von zumindest einem Ende der Maschine her durch eine Antriebseinrichtung 115 angetrieben, welche einen Antriebsmotor 116 mit einem Ausgangsgetriebe 118, einem Vorgelege 120 und einem Getriebe 122, 124 umfaßt. Das zweite Element 124 des letzteren Getriebes bestimmt die Drehzahlverhältnisse der Zylinder 100, 104 (und damit das Ausmaß des Vorverzugs).

Die Antriebsanordnung 115 umfaßt ferner einen Rückkopplungssignalgenerator 126, der mit der Motorwelle gekoppelt ist und eine Rückkopplungssteuereinrichtung 128, welche das Ausgangssignal vom Generator 116 empfängt, es mit einem auf einer Leitung 130 von einer Zentralsteuereinheit 132 gelieferten Sollwert vergleicht und ein entsprechendes Ausgangssignal auf der Leitung 134 liefert, um den Zustand des Motors 116 derart zu verändern, daß das Ausgangssignal des Generators 126 mit dem Sollwert übereinstimmt. Die Steuervorrichtung 128 ist vorzugsweise für einen Vierquadrantenbe trieb ausgelegt. Die Antriebseinrichtung 115 kann wahlweise ein Schwungrad 136 aufweisen, dies ist jedoch nicht zwingend erforderlich. Die Antriebseinrichtung 115 kann am anderen Ende des gleichen Zylinderpaares 100, 104 verdoppelt sein, wobei der gleiche Sollwert beiden Antriebseinrichtungen zugeführt wird.

Der Lieferzylinder 108 ist durch zumindest eine weitere Antriebseinrichtung 135 angetrieben, welche ebenso wie die Einrichtung 115, jedoch ohne das mechanische Getriebe 124 ausgebildet ist. Die Anordnung 135 umfaßt somit ein Getriebe 138, welches mit dem Zylinder 108 gekoppelt ist, ein Vorgelege 140, das Ausgangsgetriebe 142 des Antriebsmotors 144, einen Rückkopplungssignalgenerator 146, eine Rückkopplungssteuereinrichtung 148, welche das Ausgangssignal des Generators 146 empfängt und auf der Leitung 150 ein Steuersignal für den Motor 144 liefert, eine Leitung 152, welche einen entsprechenden Sollwert von der Zentralsteuereinheit 132 liefert und (wahlweise) ein Schwungrad 154. Die Antriebsanordnung 135 kann am anderen Zylinderende ebenfalls verdoppelt sein. Der Einfachheit halber wird angenommen, daß nur die dargestellten Anordnungen 115, 135 erforderlich sind, um die notwendigen Betriebsbedingungen sicherzustellen.

Wie beschrieben und dargestellt ist' der Hauptverzug durch zwei geregelte Motoren (Servomotoren) 116, 144 bestimmt. Diese Motoren können Wechselstrommotoren (Synchron- oder Asynchronmotoren), Gleichstrommotoren herkömmlicher Art oder bürstenlose Gleichstrommotoren sein. Die vom Rückkopplungsgenerator 126 oder 146 erfaßte Motor-Ausgangscharakteristik kann die Ausgangsdrehzahl (Umdrehungen pro Minute) - was einen drehzahlgeregelten Motor ergibt - oder die Winkelstellung der Ausgangswelle - was einen lagegeregelten Motor ergibt - sein. In der bevorzugten Vorrichtung ist zumindest einer der Motoren 116, 114 ein lagegeregelter Motor, wobei jedoch selbst die Verwendung zweier drehzahlgeregelter Motoren (von denen jeder seine eigene Rückkopplungsschleife vom Ausgang zum Eingang aufweist) gegenüber dem Stand der Technik wesentliche Vorteile mit sich bringt.

Bei der dargestellten Anordnung, bei welcher jeder Motor einen unabhängig von den anderen bestimmten Sollwert empfängt, ist jeder Motor vorzugsweise eine lagegeregelter Motor. Jeder Motor besitzt dann vorzugsweise eine entsprechende Kodiereinrichtung oder einen entsprechenden Drehmelder in Zuordnung zu dessen Ausgangswelle, wobei der Rückkopplungssignalgenerator 126 oder 146 ein Signal liefert, welches die Position bzw. Lage der Motorwelle (relativ zum gleichen vorgegebenen Bezugswert), wie sie durch die Kodiereinrichtung oder den Drehmelder gegeben ist, repräsentiert.

Gemäß einer alternativen Anordnung (nicht gezeigt) kann eine Antriebseinrichtung durch einen Master-Motor und die andere durch einen Slave-Motor angetrieben sein. Der Sollwert für den Slave-Motor wird dann nicht von der zentralen Steuerung, sondern vom Master-Motor abgeleitet. In diesem Falle kann der Master-Motor ein drehzahlgeregelter Motor sein, der mit einer Kodiereinrichtung ausgestattet ist, welche nicht in der Rückkopplungssteuerung des Master-Motors selbst, sondern dazu verwendet wird, einen Sollwert für einen lage- bzw. positionsgeregelten Slave-Motor zu liefern. Der drehzahlgeregelte Motor wird dann vorzugsweise dazu verwendet, die Lieferzylinder anzutreiben, so daß der Mittelzylinder zwangsweise der Lage des Lieferzylinders folgt.

Die Art des gesteuerten Eingangssignals zu dem jeweiligen Antriebsmotor hängt von der Auslegung dieses Motors und der gewünschten Leistung ab. Generell wird es erforderlich sein, den Leistungseintrag zum Motor so zu steuern, daß dieser in der Lage ist, auf erfaßte Abweichungen vom gewünschten (Soll-) Zustand entsprechend zu reagieren. Diese Reaktion bzw. Antwort muß die Belastung des Motors sowie die erforderliche Geschwindigkeit der Antwort berücksichtigen, wodurch die Beschleunigung des Motors repräsentiert wird.

Aus den bereits oben beschriebenen Gründen wird als Motor bevorzugt ein bürstenloser Gleichstrommotor verwendet. Diese Art von Motor umfaßt ein der Welle (Rotor) zugeordnetes Positionserfassungssystem, um die elektronische Kommutation zu ermöglichen, so daß dieser Motor bereits in idealer Weise zur Verwendung in Verbindung mit einer positionsregelnden Rückkopplungsschleife geeignet ist. Die Verwendung einer solchen Art von Motor ist jedoch zur Verwirklichung einer positionsgeregelten Antriebsanordnung nicht zwingend erforderlich.

Fig. 9 zeigt ferner einen Antrieb für die Spindel, welche beispielsweise durch die Spinnstelle 112 dargestellt ist. Dieser Antrieb umfaßt beispielsweise einen Wechselstrommotor 160, welcher mit einem variablen Getriebe 162 gekoppelt ist. Das variable Getriebe ist beispielsweise einem herkömmlichen 4-Spindel-Riemenantrieb einer Ringspinnmaschine zugeordnet. In ebenfalls bekannter Weise können alternativ dazu Spindelantriebssysteme von Ringspinnmaschinen Tangentialriemen aufweisen, welche eine Reihe von Spindeln antreiben. Es ist jedoch auch möglich, jeder Spindel einen eigenen, unabhängigen Antriebsmotor zuzuordnen und die Energieversorgung dieser Motoren so zu steuern, daß sich eine gewünschte Spindeldrehzahl einstellt. Derartige Systeme wurden beispielsweise von SKF (IMDS-Systems) und Asea-Brown-Boveri (MAS-System) vorgeschlagen und auf der internationalen Textilmaschinenausstellung in Paris 1987 demonstriert.

Die Erfindung ist jedoch nicht auf die Verwendung bei Spindeln aufweisenden Spinnstellen begrenzt. Im Falle eines Düsenspinnsystems, wie es beispielsweise in letzter Zeit von der Murata-Company angeboten wird, umfaßt die Spinnstelle Luftdüsen, welche keine drehenden mechanischen Teile aufweisen. Die Erfindung ist im Kern in gleicher Weise auch bei Streckwerkanordnungen für eine Verwendung in solchen Spinnmaschinen einsetzbar.

Gemäß Fig. 9 wird der Ausgang des Variatos über ein entsprechendes Zwischengetriebe 164, 166 auch einerseits einem Ringbankantrieb 168 und andererseits einer Kodiereinrichtung 170 zugeführt, die ein Signal an die zentrale Steuereinheit liefert, welches die Spindeldrehzahl angibt. Wird die Spindeldrehzahl direkt von der zentralen Steuereinheit gesteuert, ist diese letztere Verbindung nicht erforderlich, sofern keine Überwachung oder Rückkopplungssteuerung gewünscht ist. Falls erforderlich, kann die Ringbank auch unabhängig angetrieben werden. Sie ist natürlich dort nicht erforderlich, wo die Spinnsysteme keine Ringe oder entsprechende Einrichtungen zur Drallvermittlung und zur Bildung von Packungen erfordern. Die vorliegende Erfindung stellt eine Weiterentwicklung der Grundgedanken dar, wie sie in der europäischen Patentanmeldung 89 106 261.4 derselben Anmelderin im Zusammenhang mit Streckwerkanordnungen von Spinnmaschinen entwickelt wurden. Diese zuletzt genannte europäische Patentanmeldung entspricht den folgenden Anmeldungen in anderen Ländern:

| Land: | Anmeldetag: | Nr.: |
|-------|-------------|------|
| USA | 10. April 1989 | SN 336 160 |
| Japan | 13. April 1989 | (Vertreter-Aktenzeichen: A 895 264) |
| Indien | 21. Februar 1989 | 142/MAS/89 |

## Ansprüche

1. Textilmaschine mit einer Reihe von Streckwerken und einer Anzahl von Textilspindeln, wobei die Streckwerke gemeinsame Antriebszylinder aufweisen und die Spindeln von mindestens einem elektrischen Hauptantrieb angetrieben sind und wobei die Drehzahl der Streckwerkszylinder mit der Drehzahl des Hauptantriebs in bestimmten Drehzahlverhältnissen gekoppelt ist,

dadurch **gekennzeichnet,**

daß als Streckwerksantrieb ein positionsgeregelter bürstenloser Gleichstrommotor (M x) mit elektronischer Kommutation (31) eingesetzt ist.

2. Textilmaschine nach Anspruch 1,

dadurch **gekennzeichnet,**

daß der Streckwerksantrieb mit zusätzlicher Schwungmasse versehen ist.

3. Textilmaschine nach Anspruch 2,

dadurch **gekennzeichnet,**

daß die Schwungmasse derart bemessen ist, daß die Auslaufzeit des Streckwerkes größenordnungsmäßig der Auslaufzeit des Hauptantriebes entspricht.

4. Textilmaschine nach Anspruch 1,

dadurch **gekennzeichnet,**

daß der Streckwerksantriebsmotor (M x) einen Positionsgeber (34) aufweist, dessen Ausgang an einen Ein-Chip-Regler (31) für die digitale Lageregelung und die elektronische Kommutation angeschlossen ist.

5. Textilmaschine nach Anspruch 4,

dadurch **gekennzeichnet,**

daß an den Streckwerksmotor (M x) außer einem Positionsgeber (34) ein Rotorlagegeber (35) angeschlossen ist, dessen Ausgang mit der Reglerendstufe und einem damit verbundenen elektronischen Kommutator verbunden ist.

6. Textilmaschine nach Anspruch 5,

dadurch **gekennzeichnet,**

daß am Streckwerksmotor (M x) zusätzlich ein Tachogenerator (36) vorgesehen ist, dessen Ausgang auf einen dem Lageregler (51) nachgeschalteten Tachogenerator (52) geführt ist, dessen Ausgang den Sollstrom an die Reglerendstufe mit elektronischer Kommutierung über einen Stromregler liefert.

7. Textilmaschine nach Anspruch 1,

dadurch **gekennzeichnet,**

daß der Streckwerksantrieb aus zwei oder mehreren in Serie geschalteten positionsgeregelten bürstenlosen Gleichstrommotoren (Mx, My) besteht, welche über eine gemeinsame Endstufe und einen gemeinsamen elektronischen Kommutator von einem gemeinsamen Lageregler (31) geregelt sind.

8. Textilmaschine nach Anspruch 1,

dadurch **gekennzeichnet,**

daß der Streckwerksantrieb aus zwei oder mehreren positionsgeregelten bürstenlosen Gleichstrommotoren (Mx, My) besteht, daß die Motoren an je eine Reglerendstufe (71, 72) mit vom jeweiligen Motor positionsgeregelten Kommutator (73, 74) angeschlossen sind, wobei die Sollwert-Vorgabe für die Kommutatoren gemeinsam vom ersten Lageregler (75) abgeleitet wird.

9. Textilmaschine nach Anspruch 1,

dadurch **gekennzeichnet,**

daß der Streckwerksantrieb aus zwei oder mehreren positionsgeregelten bürstenlosen Gleichstrommotoren (Mx, My) besteht, und daß die Motoren (Mx, My) mit je einer autonomen vollständigen Positionsreglereinrichtung (81, 82, 83 bzw. 84, 85, 86) verbunden sind.

10. Textilmaschine, insbesondere Spinnmaschine, mit einer Reihe von Spinnstellen, welche jeweils aus einem ihnen zugeführten Faserband einen gesponnenen Faden bilden, und einer Streckwerkanordnung zur Abgabe von verstreckten Faserbändern an die Spinnstellen, wobei die Streckwerkanordnung eine Vielzahl von insbesondere jeweils jeder Spinnstelle zugeordneten Zylindern umfaßt, insbesondere nach einem der vorhergehenden Ansprüche, dadurch **gekennzeichnet,**

daß zumindest einer der Zylinder durch einen mit einer Rückkopplungsschleife zwischen seinem Aus- und Eingang versehenen Motor antreibbar ist, wobei zumindest eine vorgegebene Ausgangscharakteristik des Motors entsprechend einem vorggebbaren Sollwert regelbar ist.

11. Textilmaschine nach Anspruch 10,

dadurch **gekennzeichnet,**

daß die vorgebbare Ausgangscharakteristik des Motors die Drehstellung und/oder die Ausgangsdrehzahl (Umdrehungen pro Minute) des Motors ist.

12. Textilmaschine nach Anspruch 10 oder 11,

dadurch **gekennzeichnet,**

daß für einen Antrieb sämtlicher Zylinder des Streckwerks durch den Motor die Zylinder zur Herstellung der gewünschten relativen Rotationsverhältnisse mechanisch miteinander gekoppelt sind.

13. Textilmaschine nach Anspruch 10 oder 11,

dadurch **gekennzeichnet,**

daß der Motor nur einen einzigen Zylinder antreibt.

14. Textilmaschine nach einem der vorhergehenden Ansprüche,

dadurch **gekennzeichnet,**

daß zumindest zwei Zylinder jeweils durch einen Motor antreibbar sind.

15. Textilmaschine nach Anspruch 14,

dadurch **gekennzeichnet,**

daß zumindest einer der beiden Hauptantriebsmotoren ein positionsgeregelter Motor ist.

16. Textilmaschine nach einem der vorhergehenden Ansprüche,

dadurch **gekennzeichnet,**

daß zwei jeweils einen Zylinder antreibende positionsgeregelte Motoren vorgesehen sind und daß diese vorzugsweise die Zylinder der Hauptstreckzone antreiben.

17. Textilmaschine nach einem der vorhergehenden Ansprüche,

dadurch **gekennzeichnet,**

daß von zwei den Zylindern einer Streckzone zugeordneten Motoren ein Motor ein positionsgeregelter Motor ist, der nach dem Prinzip der abhängigen Regelung (Master - Slave) regelbar ist, wobei der Master-Motor ein rotationsgeregelter, den Lieferzylinder der Streckzone antreibender Motor ist.

## Fig. 1

## Fig. 2

Fig. 3

Fig. 4

# Fig.5

## Fig.6

## Fig.7

## Fig.8

Fig. 9

EP 0 355 557 A1

Europäisches Patentamt

# EUROPÄISCHER RECHERCHENBERICHT

Nummer der Anmeldung

EP 89 11 4579

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-B-1018966 (SIEMENS-SCHUCKERTWERKE AG) <br> * Spalte 1, Zeilen 31 - 36; Anspruch 1 * <br> --- | 1 | D01H1/32 <br> D01H1/22 |
| A | DE-A-1901985 (T.M.M. RESEARCH LTD.) <br> * Anspruch 1 * <br> --- | 1 | |
| A | CH-A-531060 (SCHUBERT & SALZER MASCHINENFABRIK AG) <br> * Anspruch 1 * <br> --- | 1 | |
| A | Textil-Praxis <br> vol. 26, no. 7, 01 Juli 1971, Leinfelden <br> D.SCHROEDER: <br> "EINSATZ THYRISTORGESPEISTER GLEICHSTROMANTRIEBE IN DER SPINNEREI" <br> * Seite 396, Spalte 1, Zeilen 1 - 24 * <br> --- | 1 | |
| A | DE-A-3442080 (ZINSER TEXTILMASCHINEN GMBH) <br> * Anspruch 1 * <br> --- | 2, 3 | |
| A | GB-A-2044301 (ZINSER TEXTILMASCHINEN GMBH) <br> * Seite 2, Zeilen 114 - 119 * <br> ----- | 7 | |

| | | | RECHERCHIERTE SACHGEBIETE (Int. Cl.5) |
|---|---|---|---|
| | | | D01H |

Der vorliegende Recherchenbericht wurde für alle Patentansprüche erstellt

| Recherchenort | Abschlußdatum der Recherche | Prüfer |
|---|---|---|
| DEN HAAG | 17 OKTOBER 1989 | HOEFER W.D. |

EPO FORM 1503 03.82 (P0403)